# EUROPÄISCHE PATENTSCHRIFT

(11) **EP 4 260 147 B1**
(45) Veröffentlichungstag und Bekanntmachung des Hinweises auf die Patenterteilung: **25.03.2026**
(21) Anmeldenummer: 21816371.5
(22) Anmeldetag: 18.11.2021
(51) Int. Cl.: G05B 19/042

(54) **VERFAHREN ZUM DURCHFÜHREN VON BEDIENAKTIONEN AN EINEM FELDGERÄT DER AUTOMATISIERUNGSTECHNIK MITTELS EINER BEDIENEINHEIT**
METHOD FOR PERFORMING OPERATOR CONTROL ACTIONS ON AN AUTOMATION FIELD DEVICE BY MEANS OF AN OPERATOR CONTROL UNIT
PROCÉDÉ DE RÉALISATION DES ACTIONS DE COMMANDE D'OPÉRATEUR SUR UN DISPOSITIF DE TERRAIN D'AUTOMATISATION AU MOYEN D'UNE UNITÉ DE COMMANDE D'OPÉRATEUR

(30) Priorität: 10.12.2020 DE 102020132947
(43) Veröffentlichungstag der Anmeldung: 18.10.2023
(73) Patentinhaber: Endress+Hauser Process Solutions AG, 4153 Reinach (CH)
(72) Erfinder: SPIELMANN, Benedikt, 4053 Basel (CH); THOREN, Werner, 79585 Steinen (DE); DE ANDRADE, Fabricio Oliveira, 4052 Basel (CH); DING, Yi, 4056 Basel (CH)
(74) Vertreter: Endress + Hauser Group Services (Deutschland) AG+Co. KG
(86) Internationale Anmeldenummer: PCT/EP2021/082181
(87) Internationale Veröffentlichungsnummer: WO 2022/122341

(56) Entgegenhaltungen:
- EP-A1- 3 296 826
- US-A1- 2015 135 117
- US-A1- 2018 024 847
- US-A1- 2019 332 388

## Beschreibung

Die Erfindung betrifft ein Verfahren zum Durchführen von Bedienaktionen an einem Feldgerät der Automatisierungstechnik mittels einer Bedieneinheit.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus^{®}, Foundation^{®} Fieldbus, HART^{®}, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Leitsystem-Anwendungen (Siemens PCS7, ABB Symphony, Emerson Delta V) integriert sind. Ebenso ist es möglich, die Bedienprogramme auf einem mobilen Bediengerät auszuführen, um die Feldgeräte mittels dieser zu bedienen. Bedienen bedeutet insbesondere das Parametrieren, Konfigurieren und Auslesen von Daten eines Feldgeräts.

US20150135117A1 offenbart eine Vorrichtung und ein Verfahren zur benutzerdefinierten Ansicht und Steuerung von Feldgeräten durch benutzerdefinierte Gruppen und Aktionen in einem Prozesssteuerungssystem. Die benutzerdefinierten Gruppen können verwendet werden, um verschiedene Aktionen auszulösen, einschließlich benutzerdefinierter Aktionen, die für andere Gruppen von Feldgeräten (z. B. nicht kritische Feldgeräte oder nicht gruppierte Feldgeräte) möglicherweise nicht erforderlich sind.

EP3296826A1 offenbart eine Methode zur Verwendung mobiler Kommunikationsendgeräte zur Verbindung mit Regel- und Steuergeräten in Gebäudeautomationssystemen und zur Dokumentation ihres Status behebt das Problem unzureichender Dokumentation und verbessert die Effizienz und Transparenz von Inbetriebnahmeprozessen, indem sie eine effiziente Datenerfassung und Navigation zu den Gerätestandorten ermöglicht.

Zum Ausführen eines Use Cases (beispielsweise der Inbetriebnahme eines Feldgeräts, ein Loop-Test - also ein Test der korrekten Funktion der mit dem Feldgerät verbundenen Kommunikations-Stromschleife - eine Wartung eines Feldgeräts, ein Ersetzen eines Altgeräts durch ein Neugerät, ein Firmwareupdate eines Feldgeräts, etc.) müssen von dem Bediener eine Vielzahl von Bedienaktionen ausgeführt werden. Als Beispiel wird im Folgenden die Problematik bei der Durchführung eines Loop-Tests bei einem Feldgeräts beschrieben:
Während der Inbetriebnahme muss sich ein Bediener über eine Bedieneinheit (beispielsweise ein Gerätekonfigurationstool im Sinne des von der Anmelderin produzierten und vertriebenen Field Xperts) mit jedem in Betrieb zu nehmenden Feldgerät und dessen Gerätetreiber verbinden (beispielsweise über eine auf der Bedieneinheit ausgeführten Rahmenapplikation, insbesondere eine FDT-Rahmenapplikation).

US20180024847A1 offenbart ein Verfahren zum Durchführen von Bedienaktionen an Feldgeräten mittels tragbarer industrieller Geräte. Das industrielle tragbare Gerät ist so konfiguriert, dass es Kommunikationssignalen mit einem Feldgerät senden und empfangen kann.

Innerhalb dieses Gerätetreibers (beispielsweise ein DTM, falls als eine FDT-Rahmenapplikation verwendet wird) wählt der Bediener die Funktion des Loop-Tests aus. Jedoch ist die korrekte Funktion des Loop-Tests häufig in Treibern verschiedener Feldgerätetypen unterschiedlich platziert. Die korrekte Funktion innerhalb des Gerätetreibers zu finden, kann sich dabei als zeitraubend herausstellen.

Auch unterscheiden sich die genauen Bedienaktionen, die bei Feldgeräten, die verschiedene Kommunikationsarten verwenden:
Bei einem Feldgerät, welches den klassischen 4 bis 20 mA-Standard verwendet, müssen verschiedene mA-Werte getestet werden, beispielsweise 4 mA, 8 mA, 16 mA, 20 mA). Bei einem Feldgerät hingegen, welches an einen Feldbus angeschlossen wird, muss der Messbereich für die Ausgänge simuliert werden (z.B. bei 50%). Der Loop-Test selbst ist daher sehr zeitaufwendig und fehleranfällig. Für verschiedene Gerätetypen müssen zudem verschiedene Tools/Medien mitgeführt werden.

Während des Schleifentests ist eine Rückmeldung von der Leitwarte erforderlich, z.B. über Mobiltelefon, Funk, um verschiedene Schritte zu bestätigen, bzw. um die Ergebnisse in die entsprechenden Prozessleitsysteme einzugeben. Hierbei können Missverständnisse, bzw. wenig verlässliches Feedback zu einem Risiko führen.

Nach einem erfolgreichem Loop-Test muss außerdem händisch ein Bericht erstellt werden.

Der Erfindung liegt somit die Aufgabe zugrunde, ein Verfahren vorzustellen, welches eine vereinfachte und vollintegrierte Durchführung von Bedienfunktionen an einem Feldgerät der Automatisierungstechnik erlaubt.

Die Aufgabe wird durch ein Verfahren zum Durchführen von Bedienaktionen an einem Feldgerät der Automatisierungstechnik mittels einer Bedieneinheit gemäß Anspruch 1 gelöst.

Das erfindungsgemäße Verfahren ermöglicht ein harmonisiertes, automatisiertes und vollintegriertes Ausführen von Use Cases betreffend ein Feldgerät. Die von einem Bediener auszuübenden Aktionen werden auf ein Minimum reduziert.

Feldgeräte, welche im Zusammenhang mit dem erfindungsgemäßen Verfahren genannt werden, sind bereits im einleitenden Teil der Beschreibung beispielhaft aufgeführt worden.

Als "cloudbasierte Plattform" wird ein für einen Bediener per Internet kontaktierbarer Server bezeichnet, auf dem eine oder mehrere Applikationen ausgeführt werden, welche ein Anzeigen, Verarbeiten und Verwalten von Daten der Assets einer Anlage ermöglicht.

Gemäß einer vorteilhaften Ausgestaltung des erfindungsgemäßen Verfahrens ist vorgesehen, dass die Bedienaktion eine der folgenden ist:
- Eine automatische Funktionsüberprüfung von zumindest einer Hardwarekomponente des Feldgeräts;
- Eine Funktionsüberprüfung einer Kommunikationsfähigkeit des Feldgeräts, insbesondere betreffend eine mit dem Feldgerät verbundene Kommunikationsschleife, bzw. ein Kommunikationsnetzwerk, in welches das Feldgerät eingebunden ist;
- Ein automatisches Bestimmen, bzw. Ändern von zumindest einem Parameterwert des Feldgeräts;

Ein Use Case besteht typischerweise aus mehreren durchzuführenden Bedienaktionen. Es ist vorgesehen, dass der Großteil dieser Bedienaktionen automatisch, also ohne ein Zutun des Bedieners von der Bedieneinheit durchgeführt. Wie die Bedienaktionen durchzuführen sind und welche Komponenten eines Feldgeräts wie von der Bedieneinheit angesprochen werden müssen, ist hierbei in einem auf der Bedieneinheit ausgeführten Bedienprogramm definiert.

Gemäß einer vorteilhaften Weiterbildung des erfindungsgemäßen Verfahrens ist vorgesehen, dass auf der Bedieneinheit ein Konfigurationsassistent ausgeführt wird, welcher dem ersten Bediener die für das Feldgerät zur Verfügung stehenden Use Cases zur Auswahl stellt, wobei der Konfigurationsassistent die zur Verfügung stehenden Use Cases anhand der aus dem Feldgerät ausgelesenen Identifikationsinformation ermittelt. Use Cases für Feldgerätetyp und Feldgerätekonfiguration unterschiedlich, ebenso die in einem Use Case definierten Bedienaktionen. Beispielsweise ist ein Loop Test für verschiedene Kommunikationsarten in den Typen der Bedienaktionen unterschiedlich. Verschiedene zur Verfügung stehende Use Cases sind in Bedieneinheit bzw. auf Bedieneinheit ausgeführtem Anwendungsprogramm gespeichert. Es kann alternativ vorgesehen sein, dass die Bedieneinheit die ausgelesenen Identifikationsinformationen an die cloudbasierte Plattform übermittelt und die cloudbasierte Plattform die für das Feldgerät zur Verfügung stehenden Use Cases und die darin definierten Bedienaktionen an die Bedieneinheit übermittelt. Auch Programmcode zur Ausführung der jeweiligen Bedienaktionen kann von der cloudbasierten Plattform an die Bedieneinheit über den zweiten Kommunikationskanal übermittelt werden.

Gemäß einer vorteilhaften Ausgestaltung des erfindungsgemäßen Verfahrens ist vorgesehen, dass der Konfigurationsassistent den Bediener durch den Schritt des Durchführens der Bedienaktion führt, indem der Konfigurationsassistent vom Bediener auszuführende Handlungen, bzw. Aktionen vorgibt und/oder erläutert. Die meisten in einem Use Case definierten Bedienaktionen werden von der Bedieneinheit automatisch, d.h. eigenständig durchgeführt. Teilweise müssen aber (mechanische) Handlungen des Bedieners durchgeführt werden, beispielsweise Benutzen von Werkzeug, anschließen von Geräten, Kabeln, etc. Der Bediener erhält eine Anleitung für das korrekte Durchführen, dadurch Fehler minimiert.

Gemäß einer vorteilhaften Ausgestaltung des erfindungsgemäßen Verfahrens ist vorgesehen, dass die Anwendung der cloudbasierten Plattform ein neues virtuelles Abbild erstellt, falls anhand der Identifikationsinformation kein zu dem Feldgerät gehöriges digitales Abbild ermittelt werden kann. Dadurch entfällt ein weiterer manueller Schritt, falls ein Feldgerät bspw. neu in Betrieb genommen wird.

Gemäß einer vorteilhaften Ausgestaltung des erfindungsgemäßen Verfahrens ist vorgesehen, dass als Bedieneinheit ein Tablet, ein mobiles Endgerät, ein PC oder eine Datenbrille verwendet wird. Auf der Bedieneinheit wird hierfür ein Anwendungsprogramm ausgeführt, welches die zur Ausführung der Bedienaktionen benötigten Funktionalitäten beinhaltet. Bei dem Anwendungsprogramm kann es sich, je nach Typ der verwendeten Bedieneinheit, um eine Rahmenapplikation (beispielsweise um eine FDT-Rahmenapplikation) mit den entsprechenden Gerätetreibern (beispielsweise DTM, etc.) oder um eine App (beispielsweise im Sinne der von der Firma Endress+Hauser herausgebrachten App "SmartBlue") handeln.

Gemäß einer vorteilhaften Ausgestaltung des erfindungsgemäßen Verfahrens ist vorgesehen, dass der Bericht das Datum und/oder die Uhrzeit des Durchführens der Bedienaktion, die Identität des ersten Bedieners und/oder die Identität des zweiten Bedieners enthält. Dadurch wird eine Nachvollziehbarkeit bezüglich des Use Cases gewährleistet, sowie die Transparenz erhöht.

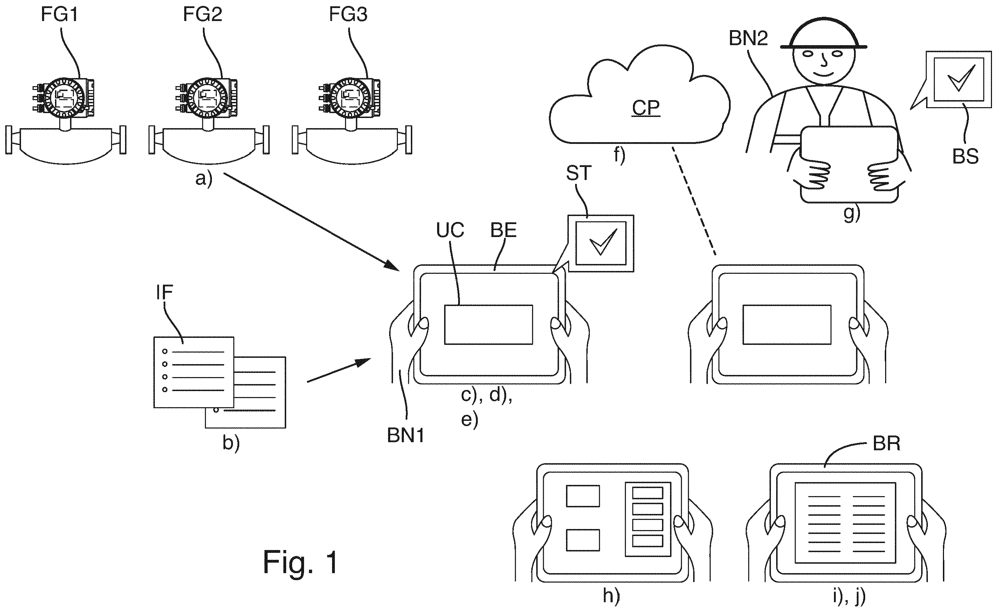

Die Erfindung wird anhand der nachfolgenden Figur näher erläutert. Es zeigt
- Fig. 1:: ein Ausführungsbeispiel des erfindungsgemäßen Verfahrens.

Eine Vielzahl von Feldgeräte FG2, FG2, FG3 soll in einem neuen Teil einer Anlage der Automatisierungstechnik in Betrieb genommen werden. Bei den Feldgeräte FG1, FG2, F3 handelt es sich um Durchflussmessgeräte nach dem Coriolisprinzip. Das erfindungsgemäße Verfahren ist jedoch nicht auf spezifische Feldgerätetypen oder Feldgeräte bestimmter Hersteller begrenzt.

Zur Inbetriebnahme verbindet sich ein erster Bediener BN1 in Verfahrensschritt a) mit einer Bedieneinheit BE mit dem Feldgerät FG2 zum Etablieren einer ersten Kommunikationsverbindung. Bei der Bedieneinheit BE handelt es sich im vorliegenden Fall um ein Industrie-Table, welches eine App zur Bedienung des Feldgeräts FG2 aufweist. Es können jedoch auch andere Typen von Bedieneinheiten, beispielsweise Laptops, weitere mobile Endgeräte, etc., verwendet werden. Die Kommunikationsverbindung erfolgt im vorliegenden Fall drahtgebunden, beispielsweise über eine Serviceschnittstelle des Feldgeräts FG2. Alternativ kann die erste Kommunikationsverbindung jedoch auch drahtlos ausgestaltet sein, beispielsweise unter Verwendung des Bluetooth-Standards.

In einem Verfahrensschritt b) liest die Bedieneinheit BE Identifikationsinformationen IF des Feldgeräts FG2 aus. Die Identifikationsinformationen IF dienen der eindeutigen Identifikation des Feldgeräts FG2 und enthalten beispielsweise die Seriennummer des Feldgeräts FG, den TAG des Feldgeräts FG2, den Gerätetyp des Feldgeräts FG und/oder den Feldgerätetyp des Feldgeräts FG2.

In einem Verfahrensschritt c) etabliert die Bedieneinheit BE eine zweite Kommunikationsverbindung zu einer cloudbasierten Plattform CP über das Internet, beispielsweise über eine Mobilverbindung.

In einem Verfahrensschritt d) stellt die Bedieneinheit BE dem ersten Bediener BN1 eine Vielzahl möglicher Use Cases UC zur Bedienung des Feldgeräts FG2 zur Verfügung. Jeder der Use Cases UC enthält zumindest eine am Feldgerät FG2 auszuführende Bedienaktion. Die Bedieneinheit BE identifiziert die für das Feldgerät FG2 zur Verfügung stehenden Use Cases UC anhand der aus dem Feldgerät FG2 ausgelesenen Identifikationsinformationen IF. Alternativ übermittelt die Bedieneinheit BE die Identifikationsinformationen IF an die cloudbasierte Plattform CP, welche die zur Verfügung stehenden Use Cases UC an die Bedieneinheit BE übermittelt.

Anschließend wählt der erste Bediener BE einen der Use Cases UC aus. Im vorliegenden Fall wählt der erste Bediener als Use Case UC einen Loop-Test der Kommunikationsverbindung des Feldgeräts FG aus, welcher Teil der Inbetriebnahme ist. Es kann auch vorgesehen sein, dass der erste Bediener BN1 einen Use Case UC "Inbetriebnahme" auswählt, welcher den Loop-Test enthält. Der Loop-Test enthält mehrere Bedienaktionen, beispielsweise die Simulation mehrerer ausgegebener Prozesswerte, wobei das Feldgerät FG den entsprechenden Wert (bspw. in mA) über die Kommunikationsschleife ausgibt.

In einem Verfahrensschritt e) wird die erste der im Use Case UC definierte Bedienaktion am Feldgerät FG ausgeführt. Die Bedieneinheit BE greift hierfür über die erste Kommunikationsverbindung auf das Feldgerät FG zu. Die Bedieneinheit BE führt diese Bedienaktion im Wesentlichen automatisch durch. Im Falle, dass doch eine Aktion des ersten Bedieners BN1 notwendig ist, wird dieser entsprechend informiert. Gegebenenfalls präsentiert die Bedieneinheit BE1 dem ersten Bediener BN1, insbesondere mittels eines Wizards, die hierfür durchzuführenden Schritte.

Nach Abschluss der ersten Bedienaktion erstellt die Bedieneinheit BE im Verfahrensschritt f) eine Statusinformation ST über den Use Case (beispielsweise "erste Bedienaktion erfolgreicht abgeschlossen") und übermittelt diese Statusinformation ST über die zweite Kommunikationsverbindung an die cloudbasierte Plattform CP. Ein zweiter Bediener BN2, beispielsweise der Anlagenbetreiber, prüft dann beispielsweise den ausgegebenen Wert des Feldgeräts FG in der Leitstelle auf Korrektheit und bestätigt bei vorliegender Korrektheit die Statusinformation ST in der cloudbasierten Plattform CP.

Nach erfolgter Bestätigung erstellt die cloudbasierte Plattform CP in einem Verfahrensschritt g) eine Bestätigungsinformation BS und übermittelt diese Bestätigungsinformation BS über die zweite Kommunikationsverbindung an die Bedieneinheit BE.

Erst nach erfolgreichem Empfangen der Bestätigungsinformation BE fährt die Bedieneinheit BE mit dem Verfahrensschritt h) fort. Hier wird überprüft, ob im Use Case UC noch weitere Bedienaktionen definiert sind, beispielsweise die Simulation eines Prozesswerts verschiedener Größe. Ist dies nicht der Fall, so wird mit Verfahrensschritt i) fortgefahren. Ist dies jedoch der Fall, so werden die Verfahrensschritte e) bis g) solange wiederholt, bis alle Bedienaktionen durchgeführt sind und zu allen im Use Case UC definierten Bedienaktionen Bestätigungsinformationen vorliegen.

Anschließend erstellt die Bedieneinheit BE in einem Verfahrensschritt i) einen Bericht BR über den durchgeführten Use Case UC. Der Bericht BR enthält alle am Feldgerät FG durchgeführten Bedienaktionen, den dazugehörigen Zeitstempel, sowie die Identifikation, beispielsweise den Namen, des ersten und des zweiten Bedieners BN1, BN2. Der Bericht wird anschließend an die cloudbasierte Plattform CP übermittelt, auf dieser gespeichert, und insbesondere einem digitalen Abbild, bzw. digitalen Zwilling des Feldgeräts FG2 zugeordnet.

Das erfindungsgemäße Verfahren ermöglicht es, komfortabel Use Cases UC an einem Feldgerät FG1, FG2, FG3 vorzunehmen. Die Bedieneinheit BE führt nahezu alle Bedienaktionen automatisch durch. Diese Lösung ist vollintegriert, da der Bediener außer der Bedieneinheit BE keine weiteren Hilfsmittel oder Softwareprogramme benötigt.

### Bezugszeichenliste

- a), ..., j): Verfahrensschritte
- BE: Bedieneinheit
- BR: Bericht
- BS: Bestätigungsinformation
- BN1, BN2: erster Bediener, zweiter Bediener
- CP: cloudbasierte Plattform
- FG1, FG2, FG3: Feldgerät
- IF: Identifikationsinformation
- ST: Statusinformation betreffend den Use Case
- UC: Use Case

## Patentansprüche

1. Verfahren zum Durchführen von Bedienaktionen an einem Feldgerät (FG1, FG2, FG3) der Automatisierungstechnik mittels einer Bedieneinheit (BE), umfassend:
a) Etablieren einer ersten Kommunikationsverbindung zwischen der Bedieneinheit (BE) und dem Feldgerät (FG1, FG2, FG3);
b) Auslesen einer Identifikationsinformation (IF) des Feldgeräts aus dem Feldgerät (FG1, FG2, FG3) mittels der Bedieneinheit (BE) über die erste Kommunikationsverbindung;
c) Etablieren einer zweiten Kommunikationsverbindung zwischen der Bedieneinheit (BE) und einer cloudbasierten Plattform (CP), insbesondere über das Internet oder ein lokales Netzwerk, wobei auf der cloudbasierten Plattform (CP) digitale Abbilder einer Vielzahl von Feldgeräten (FG1, FG2, FG3) gespeichert sind, welche digitalen Abbilder zumindest einen Teil aller Parameter- und Konfigurationseinstellungen der jeweilig zugehörigen Feldgeräte (FG1, FG2, FG3) enthalten;
d) Auswählen eines Use Cases (UC) durch einen ersten Bediener (BN1) mittels der Bedieneinheit (BE), wobei ein Use Case (UC) zumindest eine oder mehrere an dem Feldgerät (FG1, FG2, FG3) durchzuführende Bedienaktionen definiert;
e) Zugreifen auf das Feldgerät (FG1, FG2, FG3) über die erste Kommunikationsverbindung und Ausführen der im ausgewählten Use Case (UC) definierten Bedienaktion; wobei
das Verfahren außerdem die folgenden Schritte umfasst:
f) Übermitteln einer Statusinformation (ST) betreffend den Use Case (UC) von der Bedieneinheit (BE) an die cloudbasierte Plattform (CP) über die zweite Kommunikationsverbindung, wobei die Statusinformation (ST) die am Feldgerät (FG1, FG2, FG3) durchgeführte Bedienaktion und deren Ergebnis enthält, wobei jede Bedienaktion von einem zweiten Bediener in einer Leitstelle bestätigt werden muss:
g) Bestätigen der Statusinformation (ST) in der Leitstelle durch den zweiten Bediener (BN2) auf einer auf der cloudbasierten Plattform (CP) ausgeführten Anwendung und Übermitteln einer Bestätigungsinformation (BS) nach erfolgtem Bestätigen von der cloudbasierten Plattform (CP) an die Bedieneinheit (BE) über die zweite Kommunikationsverbindung;
h) Nach erfolgreichem Empfangen der Bestätigungsinformation (BS), Wiederholen der Verfahrensschritte e) bis g) für jede der im Use Case (UC) definierten Bedienaktionen;
i) Erstellen eines Berichts (BR) durch die Bedieneinheit (BE), wenn für jede der im Use Case (UC) definierten Bedienaktionen eine Bestätigungsinformation (BS) an die Bedieneinheit (BE) übermittelt wurde und Übermitteln des Berichts (BR) von der Bedieneinheit (BE) an die cloudbasierte Plattform (CP) über die zweite Kommunikationsverbindung, wobei der Bericht (BR) zumindest eine Beschreibung oder eine Bezeichnung der durchgeführten Bedienaktionen enthält; und
j) Identifizieren des zu dem Feldgerät (FG1, FG2, FG3) gehörigen digitalen Abbild anhand der Identifikationsinformation (IF) und Verknüpfen des Berichts (BR) mit dem digitalen Abbild des Feldgeräts (FG1, FG2, FG3).

2. Verfahren nach Anspruch 1, wobei die Bedienaktion eine der folgenden ist:
- Eine automatische Funktionsüberprüfung von zumindest einer Hardwarekomponente des Feldgeräts (FG1, FG2, FG3);
- Eine Funktionsüberprüfung einer Kommunikationsfähigkeit des Feldgeräts (FG1, FG2, FG3), insbesondere betreffend eine mit dem Feldgerät (FG1, FG2, FG3) verbundene Kommunikationsschleife, bzw. ein Kommunikationsnetzwerk, in welches das Feldgerät (FG1, FG2, FG3) eingebunden ist;
- Ein automatisches Bestimmen, bzw. Ändern von zumindest einem Parameterwert des Feldgeräts (FG1, FG2, FG3).

3. Verfahren nach Anspruch 1 oder 2, wobei auf der Bedieneinheit (BE) ein Konfigurationsassistent ausgeführt wird, welcher dem ersten Bediener (BN1) die für das Feldgerät (FG1, FG2, FG3) zur Verfügung stehenden Use Cases (UC) zur Auswahl stellt, wobei der Konfigurationsassistent die zur Verfügung stehenden Use Cases (UC) anhand der aus dem Feldgerät (FG1, FG2, FG3) ausgelesenen Identifikationsinformation (IF) ermittelt.

4. Verfahren nach Anspruch 3, wobei der Konfigurationsassistent den ersten Bediener (BN1) durch den Schritt des Durchführens der Bedienaktion führt, indem der Konfigurationsassistent vom ersten Bediener (BN1) auszuführende Handlungen, bzw. Aktionen vorgibt und/oder erläutert.

5. Verfahren nach zumindest einem der vorherigen Ansprüche, wobei die Anwendung der cloudbasierten Plattform (CP) ein neues virtuelles Abbild erstellt, falls anhand der Identifikationsinformation (IF) kein zu dem Feldgerät (FG1, FG2, FG3) gehöriges digitales Abbild ermittelt werden kann.

6. Verfahren nach zumindest einem der vorherigen Ansprüche, wobei als Bedieneinheit (BE) ein Tablet, ein mobiles Endgerät, ein PC oder eine Datenbrille verwendet wird.

7. Verfahren nach zumindest einem der vorherigen Ansprüche, wobei der Bericht (BR) das Datum und/oder die Uhrzeit des Durchführens der Bedienaktion, die Identität des ersten Bedieners (BN1) und/oder die Identität des zweiten Bedieners (BN2) enthält.

## Claims

1. Method for performing operating actions on a field device (FG1, FG2, FG3) in automation technology by means of an operating unit (BE), comprising:
a) establishing a first communication connection between the operating unit (BE) and the field device (FG1, FG2, FG3);
b) reading identification information (IF) of the field device from the field device (FG1, FG2, FG3) by means of the operating unit (BE) via the first communication link;
c) Establishing a second communication connection between the operating unit (BE) and a cloud-based platform (CP), in particular via the Internet or a local network, wherein digital images of a plurality of field devices (FG1, FG2, FG3) are stored on the cloud-based platform (CP), which digital images represent at least a portion of all
parameter and configuration settings of the respective associated field devices (FG1, FG2, FG3);
d) Selecting a use case (UC) by a first operator (BN1) using the control unit (BE), wherein a use case (UC) contains at least one or more tasks to be performed on the field device (FG1, FG2, FG3)
operating actions to be performed on the field device (FG1, FG2, FG3);
e) Accessing the field device (FG1, FG2, FG3) via the first communication link and executing the operating action defined in the selected use case (UC); **characterized in that** the method also comprises the following steps:
f) transmitting status information (ST) relating to the use case (UC) from the operating unit (BE) to the cloud-based platform (CP) via the second communication link, wherein the status information (ST) contains the operating action performed on the field device (FG1, FG2, FG3) and its result, wherein each operating action must be confirmed by a control center;
g) Confirming the status information (ST) in the control center by a second operator (BN2) on an application running on the cloud-based platform (CP) and transmitting confirmation information (BS) after confirmation by the cloud-based platform (CP) to the operating unit (BE) via the second communication link;
h) After successful receipt of the confirmation information (BS), repeating the procedure steps e) to g) for each of the use cases (UC) ;
i) creating a report (BR) by the control unit (BE) when confirmation information (BS) has been transmitted to the control unit (BE) for each of the control actions defined in use case (UC) and transmitting the report (BR) from the control unit (BE) to the cloud-based platform (CP) via the second communication link, wherein the report (BR) contains at least a description or a designation of the operating actions performed; and
j) identifying the digital image belonging to the field device (FG1, FG2, FG3) on the basis of the identification information (IF) and linking the report (BR) with the digital image of the field device (FG1, FG2, FG3).

2. Method according to claim 1, wherein the operating action is one of the following:
- An automatic function check of at least one hardware component of the field device (FG1, FG2, FG3);
- A functional check of the communication capability of the field device (FG1, FG2, FG3), in particular with regard to a communication loop connected to the field device (FG1, FG2, FG3) or a communication network in which the field device (FG1, FG2, FG3) is integrated;
- Automatic determination or modification of at least one parameter value of the field device (FG1, FG2, FG3).

3. Method according to claim 1 or 2, wherein a configuration wizard is executed on the control unit (BE), which provides the first operator (BN1) with the the field device (FG1, FG2, FG3), wherein the configuration wizard determines the available use cases (UC) on the basis of the identification information (IF) read out from the field device (FG1, FG2, FG3).

4. Method according to claim 3, wherein the configuration wizard guides the first operator (BN1) through the step of performing the operating action by specifying and/or explaining actions to be performed by the first operator (BN1).

5. Method according to at least one of the previous claims, wherein the application of the cloud-based platform (CP) creates a new virtual image if no digital image belonging to the field device (FG1, FG2, FG3) can be determined based on the identification information (IF).

6. Method according to at least one of the previous claims, wherein a tablet, a mobile terminal device, a PC, or data glasses are used as the operating unit (BE).

7. Method according to at least one of the previous claims, wherein the report (BR) contains the date and/or time of the operating action, the identity of the first operator (BN1) and/or the identity of the second operator (BN2).

## Revendications

1. Procédé pour effectuer des opérations de commande sur un appareil de terrain (FG1, FG2, FG3) de la technique d'automatisation au moyen d'une unité de commande (BE), comprenant :
a) l'établissement d'une première liaison de communication entre l'unité de commande (BE) et l'appareil de terrain (FG1, FG2, FG3) ;
b) la lecture d'une information d'identification (IF) de l'appareil de terrain à partir de l'appareil de terrain (FG1, FG2, FG3) à l'aide de l'unité de commande (BE) via la première liaison de communication ;
c) établissement d'une deuxième connexion de communication entre l'unité de commande (BE) et une plateforme basée sur le cloud (CP), en particulier via Internet ou un réseau local, des images numériques d'une pluralité d'appareils de terrain (FG1, FG2, FG3) étant stockées sur la plateforme basée sur le cloud (CP), lesquelles images numériques représentent au moins une partie de tous les paramètres et réglages de configuration des appareils de terrain (FG1, FG2, FG3) respectifs associés ;
d) sélection d'un cas d'utilisation (UC) par un premier opérateur (BN1) à l'aide de l'unité de commande (BE), un cas d'utilisation (UC) comprenant au moins une ou plusieurs opérations à effectuer sur l'appareil de terrain (FG1, FG2, FG3) définit au moins une ou plusieurs actions à effectuer sur l'appareil de terrain (FG1, FG2, FG3) ;
e) accès à l'appareil de terrain (FG1, FG2, FG3) via la première liaison de communication et exécution de l'action de commande définie dans le cas d'utilisation sélectionné (UC) ; **caractérisé en ce que** le procédé comprend en outre les étapes suivantes :
f) transmission d'une information d'état (ST) concernant le cas d'utilisation (UC) depuis l'unité de commande (BE) vers la plateforme basée sur le cloud (CP) via la deuxième liaison de communication, l'information d'état (ST) contenant l'action de commande effectuée sur l'appareil de terrain (FG1, FG2, FG3) et son résultat, chaque action de commande devant être confirmée par un centre de contrôle ;
g) confirmation des informations d'état (ST) dans le centre de contrôle par un deuxième opérateur (BN2) sur une application exécutée sur la plateforme basée sur le cloud (CP) et transmission d'informations de confirmation (BS) après confirmation effectuée par la plateforme basée sur le cloud (CP) à l'unité de commande (BE) via la deuxième liaison de communication ;
h) après réception réussie des informations de confirmation (BS), répétition des étapes de procédure e) à g) pour chacune des informations d'état (ST) contenues dans le cas d'utilisation (UC)
i) Création d'un rapport (BR) par l'unité de commande (BE) lorsqu'une information de confirmation (BS) a été transmise à l'unité de commande (BE) pour chacune des actions de commande définies dans le cas d'utilisation (UC) et transmission du rapport (BR) de l'unité de commande (BE) à la plateforme basée sur le cloud (CP) via la deuxième liaison de communication, le rapport (BR) contenant au moins une description ou une désignation des actions de commande effectuées ; et
j) identifier l'image numérique associée à l'appareil de terrain (FG1, FG2, FG3) à l'aide des informations d'identification (IF) et relier le rapport
(BR) à l'image numérique de l'appareil de terrain (FG1, FG2, FG3).

2. Procédé selon la revendication 1, dans lequel l'action de commande est l'une des suivantes :
- un contrôle automatique du fonctionnement d'au moins un composant matériel de l'appareil de terrain (FG1, FG2, FG3) ;
- Vérification du fonctionnement de la capacité de communication de l'appareil de terrain (FG1, FG2, FG3), en particulier en ce qui concerne une boucle de communication connectée à l'appareil de terrain (FG1, FG2, FG3) ou un réseau de communication dans lequel l'appareil de terrain (FG1, FG2, FG3) est intégré ;
- Détermination ou modification automatique d'au moins une valeur de paramètre de l'appareil de terrain (FG1, FG2, FG3).

3. Procédé selon la revendication 1 ou 2, dans lequel un assistant de configuration est exécuté sur l'unité de commande (BE), qui fournit au premier opérateur (BN1) les informations nécessaires pour
l'appareil de terrain (FG1, FG2, FG3) sont proposés au premier opérateur (BN1) pour sélection, l'assistant de configuration déterminant les cas d'utilisation (UC) disponibles à partir des informations d'identification (IF) lues à partir de l'appareil de terrain (FG1, FG2, FG3).

4. Procédé selon la revendication 3, dans lequel l'assistant de configuration guide le premier opérateur (BN1) à travers l'étape d'exécution de l'action de commande en spécifiant et/ou en expliquant les actions à effectuer par le premier opérateur (BN1).

5. Procédé selon au moins l'une des revendications précédentes, dans lequel l'application de la plateforme basée sur le cloud (CP) crée une nouvelle image virtuelle si aucune image numérique appartenant à l'appareil de terrain (FG1, FG2, FG3) ne peut être déterminée à partir des informations d'identification (IF).

6. Procédé selon au moins l'une des revendications précédentes, dans lequel une tablette, un terminal mobile, un PC ou des lunettes connectées sont utilisés comme unité de commande (BE).

7. Procédé selon au moins l'une des revendications précédentes, dans lequel le rapport (BR) contient la date et/ou l'heure de l'exécution de l'action de commande, l'identité du premier opérateur (BN1) et/ou l'identité du deuxième opérateur (BN2).
